# EUROPÄISCHE PATENTSCHRIFT

(11) **EP 3 153 080 B1**
(45) Veröffentlichungstag und Bekanntmachung des Hinweises auf die Patenterteilung: **17.06.2020**
(21) Anmeldenummer: 15189134.8
(22) Anmeldetag: 09.10.2015
(51) Int. Cl.: A47J 43/07

(54) **ELEKTRISCH BETRIEBENE KÜCHENMASCHINE**
KITCHEN APPLIANCE OPERATED BY ELECTRICITY
ROBOT MENAGER ELECTRIQUE

(43) Veröffentlichungstag der Anmeldung: 12.04.2017
(73) Patentinhaber: Vorwerk & Co. Interholding GmbH, 42275 Wuppertal (DE)
(72) Erfinder: Koetz, Hendrik, 58300 Wetter (DE)
(74) Vertreter: Müller, Enno

(56) Entgegenhaltungen:
- WO-A1-2012/084356
- DE-A1-102013 106 691
- DE-U1-202011 050 875

## Beschreibung

### Gebiet der Technik

Die Erfindung betrifft zunächst eine elektrisch betriebene Küchenmaschine, insbesondere ein Koch-Mix-Gerät, zur Zubereitung eines Gargutes, welche ein Basisgerät, ein in das Basisgerät einsetzbares Gefäß mit einem Rührwerk, eine dem Gefäß zugeordnete Heizeinrichtung, einen Temperatursensor, eine Sende-Empfangs-Einrichtung zur Kommunikation mit dem Temperatursensor und eine Auswerteeinrichtung zur Auswertung der von dem Temperatursensor empfangenen Messdaten aufweist.

Die Erfindung betrifft des Weiteren ein Garbehältnis, insbesondere einen Garaufsatz und/oder einen Gareinsatz, für ein aufheizbares Gefäß einer Küchenmaschine, wie sie hier beansprucht ist, welches Garbehältnis eine oder mehrere Bodenöffnungen aufweist, durch welche aus dem Gefäß austretender Dampf in das Garbehältnis eintreten und Kondensat aus dem Garbehältnis in das Gefäß fließen kann.

Darüber hinaus betrifft die Erfindung ein Verfahren zum Betreiben einer Küchenmaschine, insbesondere eines Koch-Mix-Gerätes.

### Stand der Technik

Küchenmaschinen der vorgenannten Art sind im Stand der Technik bekannt.

Die Druckschrift DE 20 2011 050 875 U1 offenbart beispielsweise eine solche elektrische Küchenmaschine mit einem beheizbaren Rührgefäß, in welchem ein Rührwerk angeordnet ist, wobei das Rührgefäß bodenseitig mittels einer Heizeinrichtung aufheizbar ist und wobei mehrere Temperatursensoren zur Erfassung der Temperatur eines in dem Rührgefäß vorhandenen Gargutes in der Rührgefäßwandung angeordnet sind. Die Temperatursensoren sind als NTC-Elemente ausgebildet, welche über elektrische Kabel mit einer Auswerteeinrichtung verbunden sind.

Aus der DE 10 2007 054 154 A1 ist ein Garaufsatz für ein Rührgefäß einer Küchenmaschine bekannt. Aus der WO 2012/084356 A1 ist ein Kochgefäß bekannt, an welches magnetisch ein Elektronikmodul anbringbar ist, das einen abklappbaren Bodensensor zur Erfassung der Temperatur des Bodens des Kochgefäßes aufweist. Hierzu wird der Bodensensor in eine bohrungsartige Öffnung im Boden des Kochgefäßes eingesteckt. Der Temperatursensor kann als Oberflächenschallwellensensor ausgebildet sein.

### Zusammenfassung der Erfindung

Ausgehend von dem dargelegten Stand der Technik beschäftigt sich die Erfindung mit der Aufgabenstellung, eine elektrische Küchenmaschine mit einer alternativen Verbindung zwischen Temperatursensor und Auswerteeinrichtung zu schaffen.

Diese Aufgabe ist beim Gegenstand des Anspruches 1 gelöst, wobei darauf abgestellt ist, dass der Temperatursensor ein akustischer Oberflächenwellensensor (SAW-Sensor) ist und dass der Temperatursensor in und/oder an einem relativ zu dem Basisgerät örtlich variablen Element der Küchenmaschine angeordnet ist.

Der Temperatursensor ist nun ein akustischer Oberflächenwellensensor (SAW-Sensor), welcher eine drahtlose Temperaturmessung auf Basis von akustischen Oberflächenwellen ermöglicht. Ein solcher drahtloser Temperatursensor kommuniziert mit einer von dem Temperatursensor örtlich getrennten Sende-Empfangs-Einrichtung, welche Teil der Auswerteeinrichtung sein kann und/oder mit der Auswerteeinrichtung in Kommunikationsverbindung steht. Der Temperatursensor weist eine integrierte Antenne auf, wobei die Sende-Empfangs-Einrichtung ebenfalls eine Antenne aufweist und vorteilhaft in der Küchenmaschine integriert ist, die das aufheizbare Gefäß aufnimmt. Durch die Möglichkeit der drahtlosen Temperaturmessung kann der Temperatursensor besonders einfach von der Küchenmaschine getrennt bzw. entfernt werden.

Der Temperatursensor ist in und/oder an einem relativ zu dem Basisgerät örtlich variablen Element der Küchenmaschine angeordnet ist, insbesondere dem Gefäß und/oder einem auf und/oder in dem Gefäß anordenbaren Garbehältnis und/oder einem Spatel zur Manipulation des Gargutes. Durch die Ausbildung des Temperatursensors als SAW-Sensor ist dieser nun besonders einfach an örtlich variablen Elementen der Küchenmaschine anzuordnen, d. h. an Elementen, welche von dem Basisgerät getrennt bzw. entfernt werden können, beispielsweise um eine Reinigung durchzuführen. Hierzu zählt zum einen das heizbare Gefäß selbst und zum anderen bei Bedarf verwendetes Zubehör, wie beispielsweise ein Garbehältnis, ein Spatel zur Manipulation des Gargutes oder ähnliches.

Garbehältnisse wie beispielsweise Garaufsätze bzw. Gareinsätze sind im Stand der Technik hinreichend bekannt. Das Garbehältnis weist in dessen Bodenbereich üblicherweise partiell Perforierungen auf, durch welche Dampf aus dem Gefäß in das Garbehältnis eintreten kann. Sich innerhalb des Garbehältnisses bildendes Kondensat kann durch die Perforierungen wiederum in das Gefäß fließen. Gegebenenfalls kann das Garbehältnis durch einen Deckel verschlossen sein.

Ein weiteres örtlich variables Element der Küchenmaschine ist beispielsweise ein Spatel, welcher zum Einbringen von Zutaten in das Gefäß dienen kann. Darüber hinaus kann mittels des Spatels auch ein manuelles Rühren des Gargutes oder ähnliches vorgenommen werden. Im Sinne der Erfindung sind darüber hinaus weitere örtlich variable Elemente der Küchenmaschine denkbar, die üblicherweise für einen Kontakt mit dem Gargut ausgebildet bzw. vorgesehen sind. Bei einem Kontakt des örtlich variablen Elementes mit dem Gargut gelangt automatisch auch der in oder an dem örtlich variablen Element angeordnete Temperatursensor mittelbar oder unmittelbar in (thermischen) Kontakt mit dem Gargut, so dass eine zuverlässige Temperaturmessung möglich ist.

Zudem wird vorgeschlagen, dass die elektrisch betriebene Küchenmaschine mindestens zwei Temperatursensoren aufweist, welche in und/oder an verschiedenen Elementen der Küchenmaschine, insbesondere in unterschiedliche Temperaturen aufweisenden Garzonen des Gefäßes und/oder des Garbehältnisses, angeordnet sind. Da die Heizeinrichtung der elektrisch betriebenen Küchenmaschine üblicherweise dem Bodenbereich des Gefäßes zugeordnet ist, ergibt sich eine charakteristische Temperaturverteilung innerhalb des Gefäßes und gegebenenfalls des Garbehältnisses, wobei sich Bereiche (Garzonen) mit höherer bzw. niedrigerer Temperatur ausbilden. Erfindungsgemäß werden nun Temperatursensoren in derselben oder verschiedenen Garzonen des Gefäßes bzw. des Garbehältnisses eingesetzt. Die Temperatursensoren können dafür nicht nur an verschiedenen Teilbereichen desselben örtlich variablen Elementes der Küchenmaschine angeordnet sein, sondern vielmehr auch in und/oder an verschiedenen örtlich variablen Elementen der Küchenmaschine, nämlich beispielsweise zum einen an einer Wandung des Gefäßes und zum anderen an einem Spatel, oder auch an dem Spatel und an einem Deckel des Gefäßes usw. Eine Vielzahl unterschiedlicher Kombinationen ist hier denkbar. Insbesondere empfiehlt es sich, die Temperatursensoren in unterschiedlichen Garzonen einzusetzen. Anhand der von den Temperatursensoren gemessenen Messdaten kann die Heizeinrichtung so betrieben werden, dass eine möglichst homogene Temperaturverteilung innerhalb des Gefäßes bzw. des Garbehältnisses entsteht.

Neben der zuvor erläuterten elektrisch betriebenen Küchenmaschine wird mit der Erfindung ebenso ein Garbehältnis, insbesondere ein Garaufsatz und/oder ein Gareinsatz, für ein aufheizbares Gefäß dieser Küchenmaschine vorgeschlagen, welches Garbehältnis eine oder mehrere Bodenöffnungen aufweist, durch welche aus dem Gefäß austretender Dampf in das Garbehältnis eintreten und Kondensat aus dem Garbehältnis in das Gefäß fließen kann, wobei das Garbehältnis einen Temperatursensor, insbesondere einen akustischen Oberflächenwellensensor (SAW-Sensor), aufweist. Durch diese Ausgestaltung ist es nunmehr möglich, die Temperatur des Garbehältnisses und/oder des darin enthaltenen Gargutes zu messen. Somit kann der Garfortschritt und/oder die Garqualität besonders aussagekräftig bestimmt und für eine weitere Behandlung des Gargutes verwendet werden. Beispielsweise kann die ermittelte Temperatur für eine Regelung der Heizeinrichtung des aufheizbaren Gefäßes verwendet werden, damit verschiedene Gargüter optimal gegart werden und ein zuzubereitendes Rezept optimal gelingt.

Es wird vorgeschlagen, dass der Temperatursensor in oder an einer Wandung des Garbehältnisses angeordnet ist. Der Temperatursensor kann somit entweder auf einer Oberfläche des Garbehältnisses angeordnet sein, beispielsweise auf die Wandung aufgeklebt sein oder in das Material des Garbehältnisses eingebettet sein, so dass der Temperatursensor entweder nicht über die Kontur des Garbehältnisses hinaussteht oder alternativ als hervorstehendes Temperaturelement angeordnet ist, so dass dieses beispielsweise nach der Art eines Steges in das Gargut hineinragt. Falls das Garbehältnis beispielsweise aus einem Kunststoff hergestellt ist, kann der Temperatursensor in das Material des Garbehältnisses eingebettet sein, also vollständig vom Kunststoff umschlossen sein. Diesbezüglich eignen sich insbesondere Kunststoff-Spritzprozesse. Sofern der Temperatursensor ein SAW-Sensor ist, ist dieser vorteilhaft ebenso in einen Kunststoff eingebettet. Alternativ ist es jedoch auch möglich, den Temperatursensor frei in dem Gargut zu positionieren, beispielsweise in das Gargut einzutauchen oder auf die Oberfläche des Gargutes zu legen. Vorteilhaft kann eine Mehrzahl von Temperatursensoren innerhalb des Garbehältnisses vorgesehen sein, wobei diese vorteilhaft gleichmäßig über das Volumen des Gargutes verteilt sind und insgesamt sowohl die Temperatur an der Gargutoberfläche als auch die Temperatur innerhalb des Gargutes messen. Dadurch kann eine homogene Temperaturverteilung innerhalb des Gargutes sichergestellt werden, welche nicht zuletzt auch zum Erfolg der Gargutzubereitung führt.

Es wird vorgeschlagen, dass das Garbehältnis eine Mehrzahl von Garzonen aufweist, wobei jeder Garzone ein eigener Temperatursensor zugeordnet ist. Die Garzonen können sich beispielsweise durch ihre Position innerhalb des Garbehältnisses unterscheiden. Beispielsweise kann eine erste Garzone in einem zentralen Volumenbereich des Garbehältnisses ausgebildet sein, während eine zweite Garzone unmittelbar an einer Wandung des Garbehältnisses liegt. Die Garzonen können sich durch die bei einer vorgegebenen Dampftemperatur resultierende Garzonentemperatur bzw. den sich ausbildenden Garzonentemperaturbereich unterscheiden, wobei regelmäßig eine nahe zu den Bodenöffnungen des Garbehältnisses gelegene Garzone eine höhere Temperatur aufweist als eine davon weiter beabstandete Garzone. Darüber hinaus kann das Garbehältnis auch einen Garbehältniseinsatz aufweisen, welcher einen zusätzlichen Einlegeboden bildet, auf dem ebenfalls Gargut angeordnet werden kann. Der Garbehältniseinsatz bildet dabei beispielsweise eine erste Garzone, während der übrige Bereich des Garbehältnisses eine zweite Garzone bildet. Der aus einem aufheizbaren Gefäß einer Küchenmaschine aufsteigende Dampf durchsetzt zuerst das in der zweiten Garzone angeordnete Gargut und sodann das in der ersten Garzone angeordnete Gargut. Üblicherweise weist die zweite Garzone in diesem Sinne eine höhere Temperatur auf als die erste Garzone, so dass es sich empfiehlt, in den Garbehältniseinsatz solche Gargüter anzuordnen, die nur geringfügig erhitzt werden sollen. Der Zubereitungserfolg der in dem Garbehältnis angeordneten Gargüter kann anhand der von den Temperatursensoren aufgenommenen Messdaten bestimmt werden. Vorteilhaft lassen sich abhängig davon weitere Zubereitungsschritte bestimmen, beispielsweise ein Umrühren bzw. Umschichten des Gargutes, eine Erhöhung der Temperatur einer dem aufheizbaren Gefäß zugeordneten Heizeinrichtung oder ähnliches.

Insbesondere wird demnach vorgeschlagen, dass die Garzonen unterschiedliche Abstände zu den Bodenöffnungen des Garbehältnisses aufweisen. Dies kann beispielsweise durch eine Ausbildung im Bereich einer Wandung des Garbehältnisses oder durch eine Ausbildung unmittelbar im Bereich der Bodenöffnungen erreicht werden. Die Garzonen können fließend ineinander übergehen oder beispielsweise durch Rippen, Stege, Wände oder ähnliches voneinander getrennt sein. Darüber hinaus können unterschiedliche Garzonen auch in Richtung des aus dem aufheizbaren Gefäß durch das Garbehältnis aufsteigenden Dampfes in mehreren Etagen übereinander ausgebildet sein, beispielsweise durch einen zuvor beschriebenen Garbehältniseinsatz innerhalb des Garbehältnisses.

Des Weiteren wird vorgeschlagen, dass das Garbehältnis eine unabhängig von dem aus dem Gefäß austretenden Dampf heizende Heizeinrichtung aufweist. Das Garbehältnis verfügt somit über eine eigene Heizeinrichtung, so dass das in dem Garbehältnis zuzubereitende Gargut nicht oder nicht ausschließlich mittels Dampf geheizt wird, welcher aus dem aufheizbaren Gefäß der Küchenmaschine aufsteigt. Somit ist es möglich, die Temperatur des Garbehältnisses und somit auch insbesondere des Gargutes gezielt zu steuern oder besonders vorteilhaft anhand der von dem Temperatursensor gemessenen Temperatur zu regeln. Somit wird in besonders vorteilhafter Weise ein Garbehältnis geschaffen, welches sowohl eine Heizeinrichtung aufweist, als auch einen Temperatursensor, welcher das Ergebnis eines Heizvorgangs kontrolliert und gegebenenfalls wiederum eine Anpassung der Heizleistung oder der Heizdauer der Heizeinrichtung veranlasst. Das Garbehältnis kann somit gemäß einer Ausführung nur durch den Dampf des aufheizbaren Gefäßes geheizt werden. Dabei wird das gesamte Garbehältnis und gegebenenfalls darin enthaltene unterschiedliche Garzonen mittels nur eines zentralen Heizelementes geheizt. Gemäß einer weiteren Ausführung kann hingegen bei Betrieb einer oder mehrerer Heizeinrichtungen des Garbehältnisses eine gezielte Anpassung der Temperatur innerhalb des Garbehältnisses und somit auch innerhalb des Gargutes erreicht werden. Die Funktion der Heizeinrichtung des Garbehältnisses ist zudem im Gegensatz zu einer Dampfbeaufschlagung nicht von einer bestimmten Orientierung des Garbehältnisses zu dem aufheizbaren Gefäß abhängig.

Die Heizeinrichtung kann ebenso wie der Temperatursensor an unterschiedlichen Positionen in oder an dem Garbehältnis angeordnet sein, so dass auch entfernt von dem aufheizbaren Gefäß angeordnetes Gargut genauso schnell geheizt werden kann wie in der Nähe des aufheizbaren Gefäßes angeordnetes Gargut. Dadurch, dass die Heizeinrichtung unabhängig von dem aus dem Gefäß austretenden Dampf arbeitet, kann der Garvorgang innerhalb des Garbehältnisses bereits dann beginnen, wenn eine in dem aufheizbaren Gefäß enthaltene Flüssigkeit noch nicht kocht und somit noch kein Dampf in das Garbehältnis gelangt. Somit ist das Garbehältnis durch die Heizeinrichtung unabhängig von der Dampfbildung innerhalb des Gefäßes. Nicht zuletzt ermöglicht die Heizeinrichtung auch eine Verwendung des Garbehältnisses als aktiv geheizter Warmhaltebehälter. Dabei ist das Garbehältnis auch völlig unabhängig von einer Küchenmaschine bzw. dessen aufheizbaren Gefäß in Alleinstellung verwendbar. Dies insbesondere in Kombination mit dem erfindungsgemäßen Temperatursensor, und besonders vorteilhaft mit einem den Temperatursensor und die Heizeinrichtung enthaltenden Regelkreis.

Es wird vorgeschlagen, dass die Heizeinrichtung eine Mehrzahl von Teilheizeinrichtungen aufweist, welche insbesondere in unterschiedlichen Garzonen des Garbehältnisses angeordnet sind. Die Teilheizeinrichtungen können dabei in definierten Abständen in bzw. an der Wandung des Garbehältnisses angeordnet sein, so dass sich eine homogene Erwärmung des in dem Garbehältnis befindlichen Gargutes ergibt. Vorteilhaft können die Teilheizeinrichtungen dabei unterschiedliche Garzonen des Garbehältnisses ausbilden, so beispielsweise auch an einem Garbehältniseinsatz des Garbehältnisses ausgebildet sein. Vorteilhaft weist jede Garzone dabei einen eigenen Temperatursensor und eine eigene Teilheizeinrichtung auf, so dass in jeder Garzone eine separate Temperatursteuerung und/oder Temperaturregelung stattfinden kann, die durch den jeweiligen Temperatursensor überwacht wird. Wie auch der Temperatursensor kann die Heizeinrichtung bzw. die Teilheizeinrichtung in oder an der Wandung des Garbehältnisses angeordnet sein. Die Teilheizeinrichtungen können beispielsweise ringförmig oder streifenförmig in der Wandung angeordnet sein. Vorteilhaft sind diese in das Material der Wandung eingebettet, so dass kein Kontakt mit dem zuzubereitenden Gargut möglich ist.

Schließlich wird mit der Erfindung ebenfalls ein Verfahren zum Betreiben einer Küchenmaschine, insbesondere eines Koch-Mix-Gerätes, zur Zubereitung eines Gargutes vorgeschlagen, wobei mindestens zwei Temperaturen, insbesondere Temperaturen eines zuzubereitenden Gargutes, an voneinander abweichenden Positionen mittels mindestens zweier in und/oder an relativ zu dem Basisgerät örtlich variablen Elementen der Küchenmaschine angeordneter Temperatursensoren gemessen werden, und wobei zumindest eine Teilheizeinrichtung einer Mehrzahl von Teilheizeinrichtungen einer in der Küchenmaschine angeordneten Heizeinrichtung in Abhängigkeit von den ermittelten aktuellen Temperaturen betrieben wird.

Die Erfindung schlägt somit ein Verfahren zum Betreiben der Küchenmaschine mit einem Temperaturregelverfahren in Abhängigkeit von mindestens zwei gemessenen Temperaturen vor. Sofern beispielsweise an einer ersten Position eine Garguttemperatur gemessen wird, die unterhalb der Temperatur einer zweiten Position liegt, kann die Heizleistung der Heizeinrichtung entsprechend erhöht bzw. erniedrigt werden, so dass eine Angleichung der Temperaturwerte erreicht wird. Vorteilhaft wird die Heizeinrichtung dabei in Bezug auf eine der ersten Position zugeordnete Teilheizeinrichtung mit erhöhter Temperatur oder längerer Heizdauer betrieben.

In einer bevorzugten Ausgestaltung sieht das Verfahren weiter vor, dass eine Sende-Empfangs-Einrichtung an dem Basisgerät ausgebildet ist, die ein elektromagnetisches Anregungssignal sendet, wobei der Temperatursensor ein temperaturabhängiges Antwortsignal sendet und die Sende-Empfangs-Einrichtung das Antwortsignal empfängt, wobei die aktuelle Temperatur durch vergleichen des Antwortsignals der temperaturabhängigen Referenzensignal ermittelt wird.

Das Messverfahren macht somit bevorzugt vorteilhaft Gebrauch von temperaturabhängigen Oberflächenwellen, welche in dem Temperatursensor angeregt werden und auf der Oberfläche des Temperatursensors messbar sind. Der Temperatursensor wird dabei durch hochfrequente elektromagnetische Wellen zur Schwingung angeregt, wobei aufgrund der Temperaturabhängigkeit der von dem Temperatursensor zurückgesendeten elektromagnetischen Wellen auf die Temperatur des Gargutes geschlossen werden kann. Die hochfrequenten elektromagnetischen Wellen werden mittels der Sende-Empfangs-Einrichtung an den Temperatursensor gesendet. Die von dem Temperatursensor als Antwortsignal zurückgesendeten Wellen werden anschließend von der Sende-Empfangs-Einrichtung empfangen und an die Auswerteeinrichtung des Basisgerätes der Küchenmaschine weitergeleitet. Um von den empfangenen Signalen möglichst genau auf die Garguttemperatur schließen zu können, wird pro Temperaturmessung, also pro Messdurchlauf, vorteilhaft ein definiertes Frequenzband durchlaufen. Anhand der frequenzabhängigen Signalintensitäten der empfangenen Antwortsignale kann dann die Resonanzfrequenz ermittelt und daraus wiederum auf die Garguttemperatur geschlossen werden. Die ermittelte Garguttemperatur kann anschließend von der Auswerteeinrichtung an ein Display des Basisgerätes der Küchenmaschine gesendet werden und dort angezeigt werden. Alternativ und/oder zusätzlich kann die ermittelte Garguttemperatur auch zur erfindungsgemäßen Regelung eines Garprozesses innerhalb des Garbehältnisses verwendet werden. Die Regelung der aktuellen Temperatur innerhalb des Garbehältnisses ermöglicht dabei eine in Bezug auf die aktuell gemessene Temperatur optimierte Rezeptzubereitung in dem Sinne, dass abhängig von der Temperatur beispielsweise die Dauer einer Heizeinwirkung und/oder die Intensität der Heizeinwirkung rückkoppelnd beeinflusst werden. Zum einen kann dabei eine in dem Gefäß angeordnete Heizeinrichtung, beispielsweise eine an dem Gefäßboden angeordnete Heizplatte, zur Erhöhung oder Erniedrigung der Heizleistung in dem Gefäß verwendet werden, um eine Erhöhung oder Erniedrigung der Temperatur auch innerhalb des Garbehältnisses zu erreichen. Alternativ und/oder zusätzlich kann jedoch auch eine in dem Garbehältnis selbst angeordnete Heizeinrichtung bzw. eine von mehreren Teilheizeinrichtungen verwendet werden, um insbesondere in definierten Garzonen des Garbehältnisses eine Erhöhung oder Erniedrigung der Temperatur herbeizuführen.

Obwohl grundsätzlich auch eine Temperaturmessung mit Hilfe von kabelgebundenen Temperatursensoren möglich ist, wird mit der Erfindung bevorzugt vorgeschlagen, dass die Sende-Empfangs-Einrichtung per Funk mit SAW-Sensoren kommuniziert.

### Kurze Beschreibung der Zeichnungen

Im Folgenden wird die Erfindung anhand von Ausführungsbeispielen näher erläutert. Es zeigen:
- Fig. 1: eine Küchenmaschine mit einem Gefäß und einem daran angeordneten Garbehältnis,
- Fig. 2: eine Schnittansicht eines Teilbereiches des Gefäßes mit einem daran angeordneten Garbehältnis gemäß einer ersten Ausführungsform,
- Fig. 3: eine Schnittansicht eines Teilbereiches des Gefäßes mit einem daran angeordneten Garbehältnis gemäße einer zweiten Ausführungsform.

### Beschreibung der Ausführungsformen

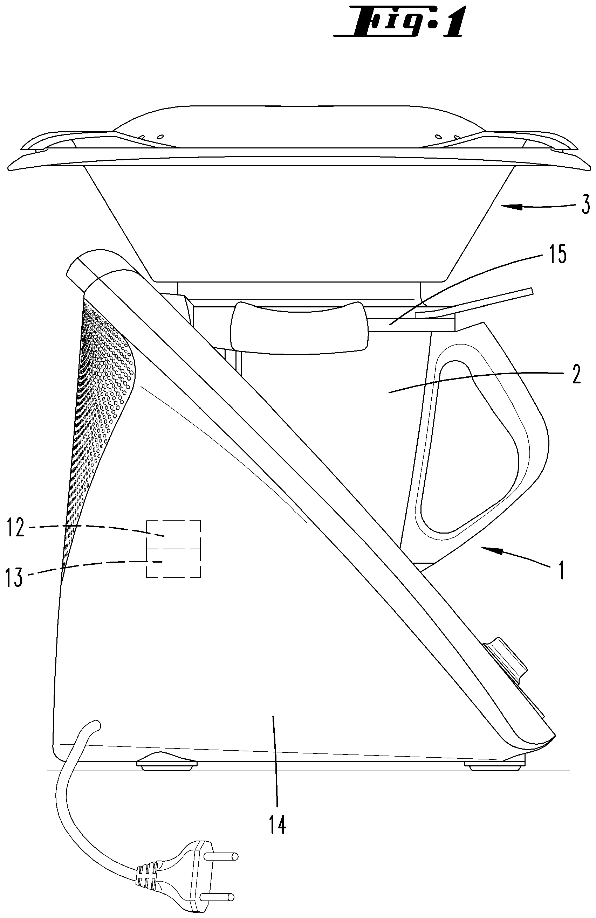

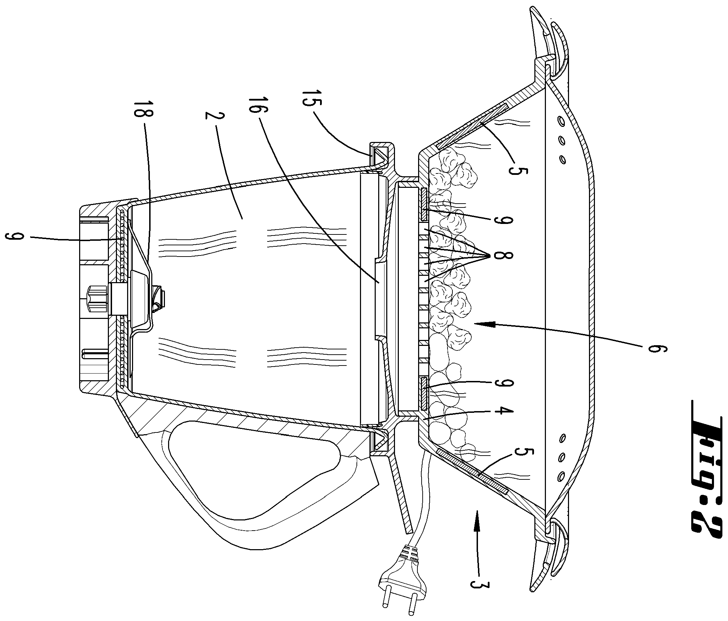

Figur 1 zeigt eine Küchenmaschine 1, welche hier beispielsweise als Koch-Mix-Gerät ausgestaltet ist. Die Küchenmaschine 1 weist ein Basisgerät 14 sowie ein darin aufgenommenes Gefäß 2 (hier: Rührgefäß) mit einem Rührwerk 18 und einem Gefäßdeckel 15 auf. Der Gefäßdeckel 15 verfügt über eine zentrale Deckelöffnung 16, durch welche in dem Gefäß 2 erzeugter Dampf in ein an dem Gefäß 2 angeordnetes Garbehältnis 3 strömen kann. Dem Gefäß 2 der Küchenmaschine 1 ist eine Heizeinrichtung 9 (siehe Figur 2) zur Aufheizung des Gefäßes 2 zugeordnet. Ebenfalls ist in dem Gefäß 2 gegebenenfalls ein Rührwerk angeordnet. Die Küchenmaschine 1 weist darüber hinaus eine Sende-Empfangs-Einrichtung 12 sowie eine Auswerteeinrichtung 13 auf. Beide sind dem Basisgerät 14 der Küchenmaschine 1 zugeordnet.

Das Garbehältnis 3 ist hier als auf das Gefäß 2 aufsetzbarer Garaufsatz ausgebildet. Das Garbehältnis 3 ist mit einem Deckel verschlossen, welcher gegebenenfalls Öffnungen zum Entweichen von Dampf aufweist.

Der in Figur 2 dargestellte Querschnitt zeigt einen oberen Teilbereich des Gefäßes 2 mit dem Gefäßdeckel 15 sowie das Garbehältnis 3. Der Gefäßdeckel 15 verschließt das Gefäß 2 zumindest teilweise, wobei an dem Gefäßdeckel 15 die zentrale Deckelöffnung 16 ausgebildet ist, durch welche Dampf aus dem Gefäß 2 in das Garbehältnis 3 strömen kann.

Das Garbehältnis 3 weist eine eine Garzone 6 begrenzende Wandung 4 auf, innerhalb welcher mehrere Temperatursensoren 5 angeordnet sind. In einem Bodenbereich des Garbehältnisses 3 ist eine Heizeinrichtung 9 ausgebildet, welche ringförmig um die Deckelöffnung 16 des Gefäßdeckels 15 angeordnet ist. Die Heizeinrichtung 9 kann beispielsweise eine elektrische Widerstandsheizung mit einzelnen Widerstandselementen sein. Die Temperatursensoren 5 sind hier als SAW-Sensoren ausgebildet, welche kabellos mittels Funk mit der Sende-Empfangs-Einrichtung 12 des Basisgerätes 4 der Küchenmaschine 1 kommunizieren können. Zur Stromversorgung der Heizeinrichtung 9 des Garbehältnisses 3 verfügt dieses über einen Netzanschluss zur Spannungsversorgung der Heizeinrichtung 9. Obwohl das Garbehältnis 3 in den gezeigten Ausführungsbeispielen über einen eigenen Netzstecker verfügt, kann die Heizeinrichtung 9 alternativ auch über das Basisgerät 14 der Küchenmaschine 1 mit Spannung versorgt werden. Sofern das Garbehältnis 3 wie dargestellt über eine eigenständige Spannungsversorgung verfügt, kann das Garbehältnis 3 auch als Stand-Alone-Gerät verwendet werden, so dass dieses auch unabhängig von der Küchenmaschine 1 und/oder dem aufheizbaren Gefäß 2 Verwendung finden kann.

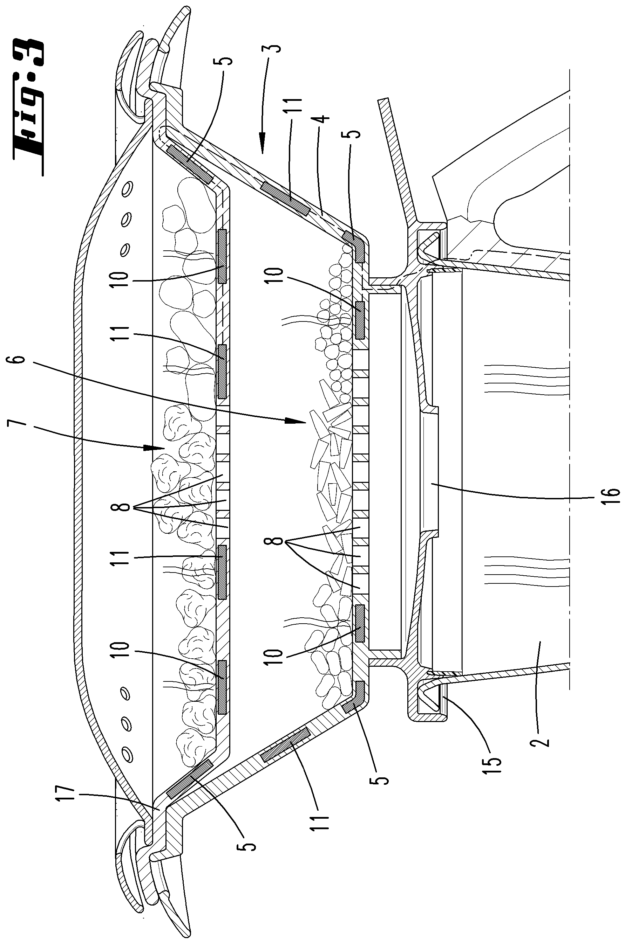

Figur 3 zeigt eine zweite Ausführungsform, bei welcher das Garbehältnis 3 einen Garbehältniseinsatz 17 in Form eines Einlegebodens aufweist, welcher mehrere Temperatursensoren 5 und mehrere (nämlich hier zwei) Teilheizeinrichtungen 10, 11 aufweist. Die Teilheizeinrichtungen 10, 11 sind jeweils konzentrisch um in dem Garbehältniseinsatz 17 ausgebildete Bodenöffnungen 8 angeordnet. Das Garbehältnis 3 und der Garbehältniseinsatz 17 werden über das Basisgerät 14 der Küchenmaschine 1 mit Spannung versorgt. Dafür weisen das Basisgerät 14, das Gefäß 2, der Gefäßdeckel 15 und die Wandung 4 des Garbehältnisses 3 bzw. des Garbehältniseinsatzes 17 Elektroleitungen auf. An den Schnittstellen zwischen Küchenmaschine 1 und Gefäß 2, Gefäß 2 und Gefäßdeckel 15, Gefäßdeckel 15 und Garbehältnis 3 bzw. Garbehältnis 3 und Garbehältniseinsatz 14 sind entsprechende elektrische Kontakte angeordnet, um die elektrische Versorgung sicherzustellen. Die Temperatursensoren 5 und die Teilheizeinrichtungen 10, 11 sind jeweils in die Wandung 4 des Garbehältnisses 3 bzw. des Garbehältniseinsatzes 17 eingebettet. Das Innere des Garbehältniseinsatzes 17 bzw. das Innere des Garbehältnisses 3 bilden jeweils eine Garzone 6, 7 für darin enthaltenes Gargut aus.

Die Erfindung funktioniert so, dass der Nutzer der Küchenmaschine 1 das Gefäß 2 mit einer Flüssigkeit, beispielsweise Wasser, befüllt und mittels des Gefäßdeckels 15 verschließt. Auf dem Gefäßdeckel 15 wird das Garbehältnis 3 angeordnet. In das Garbehältnis 3 wird zu garendes Gargut eingebracht. Das Garbehältnis 3 wird mit einem Deckel verschlossen. Gegebenenfalls können in das Garbehältnis 3 zusätzlich ein oder mehrere Garbehältniseinsätze 17 (siehe Figur 3) eingebracht werden, so dass sich mehrere Ebenen innerhalb des Garbehältnisses 3 ausbilden.

Die in dem Gefäß 2 enthaltene Flüssigkeit wird mittels der dem Gefäß 2 zugeordneten Heizeinrichtung 9 erwärmt. Sobald der Siedepunkt der Flüssigkeit erreicht ist, steigt Dampf aus dem Gefäß 2 auf und entweicht durch die Deckelöffnungen 16 in das Garbehältnis 3 bzw. den Garbehältniseinsatz 17. Dabei werden die Wandung 4 des Garbehältnisses 3 bzw. des Garbehältniseinsatzes 17, sowie die in dem Garbehältnis 3 bzw. dem Garbehältniseinsatz 17 angeordneten Gargüter erwärmt. Zusätzlich können bereits schon zu diesem Zeitpunkt die Heizeinrichtung 9 des Garbehältnisses 3 (Figur 2) bzw. die Teilheizeinrichtungen 10, 11 des Garbehältnisses 3 und des Garbehältniseinsatzes 17 (Figur 3) zum ergänzenden Aufheizen des Gargutes verwendet werden.

Die Teilheizeinrichtungen 10, 11 gemäß Figur 3 sind hier unabhängig voneinander steuerbar, so dass unterschiedliche Garzonen innerhalb des Garbehältnisses 3 bzw. des Garbehältniseinsatzes 17 ausgebildet werden können. So kann beispielsweise die Teilheizeinrichtung 10 des Garbehältniseinsatzes 17, welche weiter von den Bodenöffnungen 8 entfernt liegt als die Teilheizeinrichtung 11 mit einer höheren Temperatur betrieben werden, so dass in dem Garbehältniseinsatz 17 angeordnetes Gargut gleichmäßig geheizt wird, unabhängig von dem radialen Abstand des Gargutes relativ zu den Bodenöffnungen 8, durch welche der heiße Dampf des Gefäßes 2 strömt. Ebenso können die Teilheizeinrichtungen 10, 11 des Garbehältniseinsatzes 17 mit einer höheren Temperatur betrieben werden als die Teilheizeinrichtung 10 des Garbehältnisses 3, durch welches der heiße Dampf zunächst strömt, bevor dieser schließlich in den Garbehältniseinsatz 17 dringt. Dadurch kann sowohl in dem Garbehältniseinsatz 17 als auch dem Garbehältnis 3 selbst eine einheitliche Temperatur erreicht werden, so dass gleichartige Gargüter einer gleichen Temperatur ausgesetzt sind. Alternativ kann jedoch auch beispielsweise in der Garzone 7 des Garbehältniseinsatzes 17 eine andere Temperatur eingestellt werden als in der Garzone 6 des Garbehältnisses 3. Darüber hinaus können auch in dem Garbehältniseinsatz 17 bzw. dem übrigen Bereich des Garbehältnisses 3 weitere Etagen, d. h. Garzonen 6, 7 mit unterschiedlichen Temperaturen ausgebildet werden. In jeder dieser Garzonen 6, 7 kann dann eine andere Gargutart angeordnet werden, beispielsweise innerhalb einer ersten Garzone 6 Fisch und in einer zweiten Garzone 7 Gemüse. Aufgrund der Mehrzahl von Garzonen 6, 7 können die in dem Garbehältnis 3 bzw. dem Garbehältniseinsatz 17 enthaltenen Gargüter auch bei zueinander abweichenden Eigenschaften zu dem gleichen Zeitpunkt fertiggegart werden.

Die jeweils aktuelle Temperatur innerhalb der verschiedenen Garzonen 6, 7 wird jeweils mittels des dort angeordneten Temperatursensors 5 gemessen. In den hier gezeigten Beispielen mit SAW-Sensoren als Temperatursensoren 5 sendet die Sende-Empfangs-Einrichtung 12 des Basisgerätes 14 ein Anregungssignal an die Temperatursensoren 5. Die Temperatursensoren 5 verfügen über eine Bauteilstruktur, die eine temperaturabhängige Resonanzfrequenz aufweist, d. h. temperaturabhängig eine bestimmte Frequenz verstärkt. Hier sendet die Sende-Empfangs-Einrichtung 12 zeitlich aufeinanderfolgend eine Mehrzahl von Anregungssignalen mit voneinander abweichenden Frequenzen eines definierten Frequenzbandes aus. Die Frequenzen sind auf die Bauteilstruktur der Temperatursensoren 5 sowie die zu erwartenden Temperaturen abgestimmt. Dabei weist jeder Temperatursensor 5 einen von den anderen Temperatursensoren 5 abweichenden Frequenzbereich auf, so dass die übermittelten Messdaten einem bestimmten Temperatursensor 5 zugeordnet werden können.

Jedes Anregungssignal der Sende-Empfangs-Einrichtung 12 ruft in dem jeweiligen Temperatursensor 5 ein spezifisches Antwortsignal hervor, so dass der Temperatursensor 5 ein temperaturabhängiges Antwortsignal an die Sende-Empfangs-Einrichtung 12 zurücksendet. Da in Abhängigkeit von der aktuellen Temperatur des Gargutes im Bereich eines Temperatursensors 5 nicht alle Frequenzen gleichmäßig innerhalb der Bauteilstruktur des jeweiligen Temperatursensors 5 verstärkt werden, kann aus der Signalintensität des Antwortsignals ermittelt werden, welche Temperatur das dort angeordnete Gargut derzeit aufweist. Die von der Sende-Empfangs-Einrichtung 12 empfangenen Antwortsignale werden an die Auswerteeinrichtung 13 übermittelt und dort mit temperaturabhängigen Referenzfrequenzen verglichen. Sofern ein Anregungssignal der Sende-Empfangs-Einrichtung 12 bei einer aktuellen Temperatur mit einer Resonanzfrequenz des jeweiligen Temperatursensors 5 korrespondiert, ist die Signalintensität dieses Antwortsignals höher als die Signalintensitäten der Antwortsignale in Bezug auf davon abweichende Frequenzen. Die durch die Sende-Empfangs-Einrichtung 12 von dem jeweiligen Temperatursensor 5 empfangenen Antwortsignale werden somit in Bezug auf das Antwortsignal mit der größten Signalintensität analysiert, so dass die aktuell an dem jeweiligen Temperatursensor 5 anliegende Temperatur zuverlässig ermittelt werden kann. Dabei ist das Messergebnis umso aussagekräftiger, je größer die Anzahl der Anregungssignale innerhalb des definierten Frequenzbandes ist. Anschließend können die aktuell ermittelten Temperaturen mit für die Zubereitung des Gargutes gewünschten Temperaturen verglichen werden. Sofern eine Abweichung festgestellt wird, beispielsweise eine zu geringe Temperatur im Bereich der Garzone 7 des Garbehältniseinsatzes 17 werden die Teilheizeinrichtungen 10 und/oder 11 auf eine größere Heizleistung eingestellt, um den gewünschten Temperaturwert zu erreichen. Dabei wird weiterhin kontinuierlich die Temperatur mittels der Temperatursensoren 5 gemessen. Es entsteht somit ein Regelkreis, bei welchem die Temperatur der Teilheizeinrichtungen 10, 11 oder auch der Heizeinrichtung 9 des Gefäßes 2 bzw. des Garbehältnisses 3 in Abhängigkeit von der festgestellten Temperaturdifferenz zwischen der aktuell von dem Temperatursensor 5 gemessenen Temperatur und der gewünschten Temperatur geregelt wird. Somit kann die Heizleistung und/oder Heizdauer zum Gelingen einer Rezeptzubereitung verwendet werden. Dies insbesondere durch Erhöhung/Erniedrigung der Intensität der Heizeinwirkung und/oder der Dauer der Heizeinwirkung.

Das Ein- und Ausschalten der Heizeinrichtung 9 bzw. der Teilheizeinrichtungen 10, 11 erfolgt automatisch durch eine Steuerung der Küchenmaschine 1, beispielsweise die Auswerteeinrichtung 13. Somit können die Heizeinrichtung 9 bzw. die Teilheizeinrichtungen 10, 11 in Abhängigkeit von einem aktuellen Zubereitungsfortschritt eines Rezeptes und den Messdaten der Temperatursensoren 5 automatisch betrieben werden. Obwohl dies in den Figuren nicht dargestellt ist, kann die Erfindung selbstverständlich auch so funktionieren, dass nur die Heizeinrichtung 9 des Gefäßes 2 betrieben wird und nur deren Heizleistung bzw. Heizdauer in Abhängigkeit von dem Messergebnis der Temperatursensoren 5 des Garbehältnisses 3 bzw. des Garbehältniseinsatzes 17 geregelt wird. Somit kann entweder die Heizeinrichtung 9 des Gefäßes 2 als zentrale Heizeinrichtung verwendet werden oder alternativ eine Mehrzahl von Teilheizeinrichtungen 10, 11 vorgesehen sein, welche vorteilhaft unmittelbar in den Garzonen 6, 7 angeordnet sind.

Obwohl die Erfindung vornehmlich in Bezug auf an dem Garbehältnis, d. h. dem Garaufsatz, angeordnete Temperatursensoren verdeutlicht wurde, ist es selbstverständlich auch möglich, die Temperatursensoren im Sinne der Erfindung an dem Gefäß der Küchenmaschine und/oder anderen örtlich variablen Elementen der Küchenmaschine, wie beispielsweise einem Spatel zur Manipulation des Gargutes, anzuordnen. Selbstverständlich können Temperatursensoren auch gleichzeitig an dem Gefäß, dem Garbehältnis und/oder dem Spatel bzw. an weiterem Zubehör angeordnet sein. Jedes der vorgeschlagenen örtlich variablen Elemente kann dabei entweder nur einen Temperatursensor oder auch mehrere Temperatursensoren gleichzeitig aufweisen.

### Liste der Bezugszeichen

- 1: Küchenmaschine
- 2: Gefäß
- 3: Garbehältnis
- 4: Wandung
- 5: Temperatursensor
- 6: Garzone
- 7: Garzone
- 8: Bodenöffnung
- 9: Heizeinrichtung
- 10: Teilheizeinrichtung
- 11: Teilheizeinrichtung
- 12: Sende-Empfangs-Einrichtung
- 13: Auswerteeinrichtung
- 14: Basisgerät
- 15: Gefäßdeckel
- 16: Deckelöffnung
- 17: Garbehältniseinsatz
- 18: Rührwerk

## Patentansprüche

1. Elektrisch betriebene Küchenmaschine (1), insbesondere Koch-Mix-Gerät, zur Zubereitung eines Gargutes, welche ein Basisgerät (14), ein in das Basisgerät (14) einsetzbares Gefäß (2) mit einem Rührwerk (18), eine dem Gefäß (2) zugeordnete Heizeinrichtung (9), einen Temperatursensor (5), eine Sende-Empfangs-Einrichtung (12) zur Kommunikation mit dem Temperatursensor (5) und eine Auswerteeinrichtung (13) zur Auswertung der von dem Temperatursensor (5) empfangenen Messdaten aufweist, **dadurch gekennzeichnet, dass** der Temperatursensor (5) ein akustischer Oberflächenwellensensor ist und dass der Temperatursensor (5) in und/oder an einem relativ zu dem Basisgerät (14) örtlich variablen Element der Küchenmaschine (1) angeordnet ist.

2. Elektrisch betriebene Küchenmaschine (1) nach Anspruch 1, **dadurch gekennzeichnet, dass** der Temperatursensor (5) in und/oder an dem Gefäß (2) angeordnet ist.

3. Elektrisch betriebene Küchenmaschine (1) nach einem der Ansprüche 1 oder 2, **dadurch gekennzeichnet, dass** der Temperatursensor (5) in und/oder an einem auf und/oder in dem Gefäß (2) anordenbaren Garbehältnis (3) angeordnet ist.

4. Elektrisch betriebene Küchenmaschine (1) nach einem der vorhergehenden Ansprüche, **dadurch gekennzeichnet, dass** der Temperatursensor (5) in und/oder an einem Spatel zur Manipulation des Gargutes angeordnet ist.

5. Elektrisch betriebene Küchenmaschine (1) nach einem der vorhergehenden Ansprüche, **gekennzeichnet durch** mindestens zwei Temperatursensoren (5), welche in und/oder an verschiedenen Elementen der Küchenmaschine (1) angeordnet sind.

6. Elektrisch betriebene Küchenmaschine (1) nach Anspruch 5, **dadurch gekennzeichnet, dass** die Temperatursensoren (5) in unterschiedliche Temperaturen aufweisenden Garzonen des Gefäßes (2) und/oder des Garbehältnisses (3), angeordnet sind.

7. Garbehältnis (3), insbesondere Garaufsatz und/oder Gareinsatz, für ein aufheizbares Gefäß (2) einer Küchenmaschine (1) nach einem der Ansprüche 1 bis 6, welches Garbehältnis (3) eine oder mehrere Bodenöffnungen (8) aufweist, durch welche aus dem Gefäß (2) austretender Dampf in das Garbehältnis (3) eintreten und Kondensat aus dem Garbehältnis (3) in das Gefäß (2) fließen kann, **dadurch gekennzeichnet, dass** das Garbehältnis (3) einen Temperatursensor (5), insbesondere einen akustischen Oberflächenwellensensor aufweist.

8. Garbehältnis (3) nach Anspruch 7, **dadurch gekennzeichnet, dass** der Temperatursensor (5) in oder an einer Wandung (4) des Garbehältnisses (3) angeordnet ist.

9. Garbehältnis (3) nach einem der Ansprüche 7 oder 8, **dadurch gekennzeichnet, dass** das Garbehältnis (3) eine Mehrzahl von Garzonen (6, 7) aufweist, wobei jeder Garzone (6, 7) ein eigener Temperatursensor (5) zugeordnet ist.

10. Garbehältnis (3) nach einem der Ansprüche 7 bis 9, **gekennzeichnet durch** eine unabhängig von dem aus dem Gefäß (2) austretenden Dampf heizende Heizeinrichtung (9), insbesondere eine eine Mehrzahl von Teilheizeinrichtungen (10, 11) aufweisende Heizeinrichtung (9), wobei die Teilheizeinrichtungen (10, 11) insbesondere in unterschiedlichen Garzonen (6, 7) des Garbehältnisses (3) angeordnet sind.

11. Verfahren zum Betreiben einer Küchenmaschine (1), insbesondere eines Koch-Mix-Gerätes, zur Zubereitung eines Gargutes, **dadurch gekennzeichnet, dass** mindestens zwei Temperaturen, insbesondere Temperaturen eines zuzubereitenden Gargutes, an voneinander abweichenden Positionen mittels mindestens zweier in und/oder an relativ zu dem Basisgerät (14) örtlich variablen Elementen der Küchenmaschine (1) angeordneter Temperatursensoren (5) gemessen werden, und wobei zumindest eine Teilheizeinrichtung (10, 11) einer Mehrzahl von Teilheizeinrichtungen (10, 11) einer in der Küchenmaschine (1) angeordneten Heizeinrichtung (9) in Abhängigkeit von den ermittelten aktuellen Temperaturen betrieben wird.

12. Verfahren nach Anspruch 11, **dadurch gekennzeichnet, dass** eine Sende-Empfangs-Einrichtung (12) des Basisgerätes (14) ein elektromagnetisches Anregungssignal sendet, wobei der Temperatursensor (5) ein temperaturabhängiges Antwortsignal sendet, wobei eine Sende-Empfangs-Einrichtung (12) das Antwortsignal empfängt, wobei die aktuelle Temperatur durch Vergleichen des Antwortsignals mit temperaturabhängigen Referenzsignalen ermittelt wird.

13. Verfahren nach Anspruch 12, **dadurch gekennzeichnet, dass** die Sende-Empfangs-Einrichtung (12) temperaturabhängige akustische Oberflächenwellen in dem Temperatursensor (5) anregt.

14. Verfahren nach einem der Ansprüche 11 bis 13, **dadurch gekennzeichnet, dass** die Heizleistung und/oder die Heizdauer zumindest einer Teilheizeinrichung (10, 11) der Heizeinrichtung (9) in Abhängigkeit von der ermittelten Temperatur variiert wird.

## Claims

1. Electrically operated food processor (1), in particular a cooking-mixing appliance, for preparing cooked food, which processor comprises a base appliance (14), a vessel (2) which has an agitator (18) and can be inserted into the base appliance (14), a heating device (9) that is associated with the vessel (2), a temperature sensor (5), a transceiver device (12) for communicating with the temperature sensor (5), and an evaluation device (13) for evaluating the measurement data received from the temperature sensor (5), **characterised in that** the temperature sensor (5) is a surface acoustic wave sensor and **in that** the temperature sensor (5) is arranged in and/or on an element of the food processor (1) that is spatially variable relative to the base appliance (14).

2. Electrically operated food processor (1) according to claim 1, **characterised in that** the temperature sensor (5) is arranged in and/or on the vessel (2).

3. Electrically operated food processor (1) according to either claim 1 or claim 2, **characterised in that** the temperature sensor (5) is arranged in and/or on a cooking container (3) which can be arranged on and/or in the vessel (2).

4. Electrically operated food processor (1) according to any of the preceding claims, **characterised in that** the temperature sensor (5) is arranged in and/or on a spatula for manipulating the cooked food.

5. Electrically operated food processor (1) according to any of the preceding claims, **characterised by** at least two temperature sensors (5) which are arranged in and/or on different elements of the food processor (1).

6. Electrically operated food processor (1) according to claim 5, **characterised in that** the temperature sensors (5) are arranged in cooking zones of the vessel (2) and/or of the cooking container (3) that have different temperatures.

7. Cooking container (3), in particular a cooking attachment and/or cooking insert, for a heatable vessel (2) of a food processor (1) according to any of claims 1 to 6, which cooking container (3) has one or more bottom openings (8) through which steam exiting the vessel (2) can enter the cooking container (3) and condensate can flow from the cooking container (3) into the vessel (2), **characterised in that** the cooking container (3) has a temperature sensor (5), in particular a surface acoustic wave sensor.

8. Cooking container (3) according to claim 7, **characterised in that** the temperature sensor (5) is arranged in or on a wall (4) of the cooking container (3).

9. Cooking container (3) according to either claim 7 or claim 8, **characterised in that** the cooking container (3) has a plurality of cooking zones (6, 7), each cooking zone (6, 7) being associated with its own temperature sensor (5).

10. Cooking container (3) according to any of claims 7 to 9, **characterised by** a heating device (9) which heats independently of the steam exiting the vessel (2), in particular a heating device (9) having a plurality of partial heating devices (10, 11), the partial heating devices (10, 11) being arranged in particular in different cooking zones (6, 7) of the cooking container (3).

11. Method for operating a food processor (1), in particular a cooking-mixing appliance, for preparing cooked food, **characterised in that** at least two temperatures, in particular temperatures of cooked food to be prepared, are measured at mutually deviating positions by means of at least two temperature sensors (5) arranged in and/or on elements of the food processor (1) that are spatially variable relative to the base appliance (14), and at least one partial heating device (10, 11) of a plurality of partial heating devices (10, 11) of a heating device (9) arranged in the food processor (1) being operated depending on the determined current temperatures.

12. Method according to claim 11, **characterised in that** a transceiver device (12) of the base appliance (14) transmits an electromagnetic excitation signal, the temperature sensor (5) transmitting a temperature-dependent response signal, a transceiver device (12) receiving the response signal, the current temperature being determined by comparing the response signal with temperature-dependent reference signals.

13. Method according to claim 12, **characterised in that** the transceiver device (12) excites temperature-dependent surface acoustic waves in the temperature sensor (5).

14. Method according to any of claims 11 to 13, **characterised in that** the heating power and/or the heating duration of at least one partial heating device (10, 11) of the heating device (9) is varied depending on the determined temperature.

## Revendications

1. Appareil de cuisine électrique (1), en particulier robot cuiseur-mixeur, pour la préparation d'un aliment à cuire, qui comprend un appareil de base (14), une cuve (2) avec un agitateur (18), qui peut être insérée dans l'appareil de base (14), un dispositif de chauffage (9) associé à la cuve (2), un capteur de température (5), un dispositif émetteur-récepteur (12) pour communiquer avec le capteur de température (5) et un dispositif d'évaluation (13) pour évaluer les données de mesure reçues par le capteur de température (5), **caractérisé en ce que** le capteur de température (5) est un capteur acoustique à ondes de surface et **en ce que** le capteur de température (5) est agencé dans et/ou joint à un élément de l'appareil de cuisine (1) qui est à localisation variable relativement à l'appareil de base (14).

2. Appareil de cuisine électrique (1) selon la revendication 1, **caractérisé en ce que** le capteur de température (5) est agencé dans et/ou joint à la cuve (2).

3. Appareil de cuisine électrique (1) selon l'une des revendications 1 ou 2, **caractérisé en ce que** le capteur de température (5) est agencé dans et/ou joint à un récipient de cuisson (3) qui peut être agencé sur et/ou dans la cuve (2).

4. Appareil de cuisine électrique (1) selon l'une des revendications précédentes, **caractérisé en ce que** le capteur de température (5) est agencé dans et/ou joint à une spatule pour manipuler les aliments à cuire.

5. Appareil de cuisine électrique (1) selon l'une des revendications précédentes, **caractérisé par** au moins deux capteurs de température (5) qui sont agencés dans et/ou joints à différents éléments de l'appareil de cuisine (1).

6. Appareil de cuisine électrique (1) selon la revendication 5, **caractérisé en ce que** les capteurs de température (5) sont agencés dans des zones de cuisson de la cuve (2) et/ou du récipient de cuisson (3) qui présentent des températures différentes.

7. Récipient de cuisson (3), en particulier accessoire de cuisson et/ou insert de cuisson, pour une cuve pouvant être chauffée (2) d'un appareil de cuisine (1) selon l'une des revendications 1 à 6, lequel récipient de cuisson (3) présente une ou plusieurs ouvertures de fond (8) à travers lesquelles de la vapeur sortant de la cuve (2) peut pénétrer dans le récipient de cuisson (3) et du condensat peut s'écouler du récipient de cuisson (3) dans la cuve (2), **caractérisé en ce que** le récipient de cuisson (3) comporte un capteur de température (5), en particulier un capteur acoustique à ondes de surface.

8. Récipient de cuisson (3) selon la revendication 7, **caractérisé en ce que** le capteur de température (5) est agencé dans ou joint à une paroi (4) du récipient de cuisson (3).

9. Récipient de cuisson (3) selon l'une des revendications 7 ou 8, **caractérisé en ce que** le récipient de cuisson (3) présente plusieurs zones de cuisson (6, 7), un capteur de température (5) propre étant associé à chaque zone de cuisson (6, 7).

10. Récipient de cuisson (3) selon l'une des revendications 7 à 9, **caractérisé par** un dispositif de chauffage (9) qui chauffe indépendamment de la vapeur sortant de la cuve (2), en particulier un dispositif de chauffage (9) comportant plusieurs dispositifs de chauffage partiel (10, 11), les dispositifs de chauffage partiel (10, 11) étant agencés en particulier dans différentes zones de cuisson (6, 7) du récipient de cuisson (3).

11. Procédé de fonctionnement d'un appareil de cuisine (1), en particulier d'un robot cuiseur-mixeur, pour la préparation d'un aliment, **caractérisé en ce qu'**au moins deux températures, en particulier les températures d'un aliment à préparer, sont mesurées à des positions différentes entre elles au moyen d'au moins deux capteurs de température (5) agencés dans et/ou joint à des éléments de l'appareil de cuisine (1) qui sont à localisation variable relativement à l'appareil de base (14), et dans lequel au moins un dispositif de chauffage partiel (10, 11) d'une pluralité de dispositifs de chauffage partiel (10, 11) d'un dispositif de chauffage (9) agencé dans l'appareil de cuisine (1) est commandé en fonction des températures actuelles déterminées.

12. Procédé selon la revendication 11, **caractérisé en ce qu'**un dispositif émetteur-récepteur (12) de l'unité de base (14) émet un signal d'excitation électromagnétique, le capteur de température (5) émettant un signal de réponse dépendant de la température, dans lequel un émetteur-récepteur (12) reçoit le signal de réponse, la température actuelle étant déterminée par comparaison du signal de réponse à des signaux de référence dépendant de la température.

13. Procédé selon la revendication 12, **caractérisé en ce que** le dispositif émetteur-récepteur (12) suscite dans le capteur de température (5) des ondes acoustiques de surface dépendantes de la température.

14. Procédé selon l'une des revendications 11 à 13, **caractérisé en ce que** la puissance de chauffage et/ou la durée de chauffage d'au moins un dispositif de chauffage partiel (10, 11) du dispositif de chauffage (9) est modifiée en fonction de la température déterminée.
